# EUROPÄISCHE PATENTSCHRIFT

(11) **EP 1 409 411 B1**
(45) Veröffentlichungstag und Bekanntmachung des Hinweises auf die Patenterteilung: **16.11.2005**
(21) Anmeldenummer: 02732407.8
(22) Anmeldetag: 26.04.2002
(51) Int. Cl.: C02F 1/14, B01D 3/34

(54) **VORRICHTUNG ZUR GEWINNUNG VON SAUBEREM SÜSSWASSER DURCH DESTILLATION VON KONTAMINIERTEM PRIMÄRWASSER**
DEVICE FOR OBTAINING CLEAN FRESH WATER BY DISTILLING CONTAMINATED PRIMARY WATER
DISPOSITIF DE PRODUCTION D'EAU DOUCE ET PURE PAR DISTILLATION D'EAU PRIMAIRE CONTAMINEE

(30) Priorität: 28.04.2001 DE 10121107
(43) Veröffentlichungstag der Anmeldung: 21.04.2004
(73) Patentinhaber: Clausthaler Umwelttechnik-Institut Gmbh (Cutec - Institut), 38678 Clausthal-Zellerfeld (DE)
(72) Erfinder: LESSING, Helmut, 31157 Sarstedt (DE)
(74) Vertreter: Gerstein, Hans Joachim
(86) Internationale Anmeldenummer: PCT/DE2002/001525
(87) Internationale Veröffentlichungsnummer: WO 2002/087721

(56) Entgegenhaltungen:
- DE-A- 3 010 208
- DE-A- 3 721 072
- DE-A- 3 829 725
- GB-A- 1 200 221
- US-A- 3 415 721

## Beschreibung

Die Erfindung betrifft eine Vorrichtung zur Gewinnung von sauberem Süßwasser durch Destillation von kontaminiertem Primärwasser nach dem Oberbegriff des Anspruchs 1.

Das Problem einer Gewinnung von sauberem Süßwasser aus kontaminiertem Primärwasser, wie Salzwasser, Brackwasser, Abwasser oder Tiefenwasser stellt sich überall dort, wo sauberes Grundwasser fehlt oder kein flächendeckendes öffentliches Wassernetz mit sauberem Süßwasser vorhanden ist. Dies gilt insbesondere für industriell wenig entwickelte Ländern sowie tropische und subtropische Bereiche. Hier ist man darauf angewiesen, vor Ort sauberes Süßwasser aus Quellen mit kontaminiertem Primärwasser zu erzeugen.

Bekannt sind hierzu mechanische Filter, sowie Vorrichtungen nach dem Prinzip der Umkehrosmose mit semipermeablen Membranen oder Vorrichtungen nach dem Prinzip der Destillation. Bei Vorrichtungen nach dem Prinzip der Destillation wird unterschieden nach Verdampfung des Primärwassers bei atmosphärischem Druck oder Unterdruck sowie nach Art der Energiezufuhr für die Verdampfung.

Gerade in tropischen und subtropischen Gebieten bietet es sich an, die Energie zur Verdampfung von Primärwasser aus Solarenergie zu gewinnen, und zwar nicht über den Umweg der Erzeugung elektrischer Energie, sondern durch unmittelbare solare Erwärmung des Primärwassers.

Eine hierfür geeignete Vorrichtung ist aus der DE 37 21 072 bekannt. Diese Vorrichtung umfasst einen aufrechten Reaktionsraum, dessen äußere Seitenwand aus für Sonnenlicht durchlässigem Glas besteht. Innerhalb des Reaktionsraums befindet sich eine Verdampfungsfläche, die mit Primärwasser benetzt wird und eine Kondensationsfläche, an der Wasserdampf kondensiert und als sauberes Süßwasser abtropft. Unterhalb der Verdampfungsfläche ist eine Auffangvorrichtung für nicht verdampftes Primärwasser und unterhalb der Kondensationsfläche eine Auffangvorrichtung für sauberes Süßwasser angeordnet.

Die Verdampfungsfläche und die Kondensationsfläche sind plan ausgebildet und weisen einem Abstand zur Seitenwand des Reaktionsraumes auf. Zwischen der Verdampfungsfläche und der Kondensationsfläche ist ein Zirkulationsraum für Luft und Wasserdampf gebildet, der außerdem durch die restlichen Seitenwände und die Boden- und Deckenwand des Reaktionsraumes begrenzt wird. Luft zirkuliert dabei entlang der Verdampfungsfläche aufwärts, reichert sich mit Wasserdampf an, wird oben im Reaktionsraum umgelenkt und sinkt an der Kondensationsfläche abwärts, wobei dort Wasserdampf kondensiert und als flüssiges Wasser abtropft. Die mit Wasserdampf abgereicherte Luft wird dann unten im Reaktionsraum umgelenkt und steigt erneut an der Verdampfungsfläche aufwärts.

Da die aufsteigenden und absteigenden Wasserdampf transportierenden Luftmassen in der Mitte des Reaktionsraumes zusammentreffen, entstehen an den Grenzflächen Verwirbelungen, die die Strömung ungünstig beeinflussen und dadurch auch den Ertrag an sauberem Süßwasser schmälern.

Der Erfindung liegt die Aufgabe zugrunde, eine Vorrichtung der eingangs genannten Art dahingehend zu verbessern, dass der Süßwasserertrag bezogen auf die bestrahlte Verdampfungsfläche und das Volumen des Reaktionsraumes verbessert wird.

Diese Aufgabe wird bei einer Vorrichtung nach dem Oberbegriff des Anspruchs 1 durch die Merkmale des Anspruchs 1 gelöst.

Weiterbildungen und vorteilhafte Ausgestaltungen ergeben sich aus den Unteransprüchen.

Durch die koaxiale Anordnung von Verdampfungsfläche und Kondensationsfläche bei der erfindungsgemäßen Vorrichtung werden zwei getrennte Räume gebildet, in denen sich die zirkulierende Luft mit Wasserdampf anreichern und abreichern kann. Jeweils an den Stirnkanten der Verdampfungsfläche und der Kondensationsfläche wird die zirkulierende Luft umgelenkt. Durch die koaxiale Anordnung ergeben sich auch vergrößerte Flächen, bezogen auf das Volumen des Reaktionsraumes, an denen Primärwasser verdampfen und Wasserdampf wieder kondensieren kann. Eine Verwirbelung an Grenzflächen zwischen aufsteigender und absteigender, mit Wasserdampf angereicherter Luft wird vermieden.

Gemäß einer Weiterbildung ist die Seitenwand des Reaktionsraumes wenigstens teilweise für Wärmestrahlung transparent.

Dadurch kann Wärmestrahlung unmittelbar zur Verdampfungsfläche gelangen und diese erwärmen.

Die Verdampfungsfläche kann dabei als schwarzer Absorber ausgebildet sein.

Dadurch werden Reflektionen von der Verdampfungsfläche wesentlich reduziert und der Energieeintrag von Wärmestrahlung in die Verdampfungsfläche erhöht.

Gemäß einer Weiterbildung ist das Primärwasser über einen im oberen Bereich der Kondensationsfläche angeordneten Wärmetauscher zu Auslassöffnungen im oberen Bereich der Verdampfungsfläche geführt.

Der Wärmetauscher dient dazu, einerseits das Primärwasser vorzuwärmen und so die über die Verdampfungsfläche eingebrachte Wärmeenergie nur noch zur zusätzlichen Erwärmung zu nutzen, andererseits aber auch den oberen Bereich der Kondensationsfläche zu kühlen, um den Wasserdampfgehalt der zirkulierenden Luft beim Vorbeiströmen an der Kondensationsfläche möglichst schnell durch Kondensation abzureichern.

Ergänzen kann im oberen Bereich der Kondensationsfläche zusätzlich ein Wärmetauscher für Kühlmedium angeordnet sein.

Dies kann die Kühlung der Kondensationsfläche unterstützen, was zum Beispiel bei hohen Temperaturen im Inneren der Reaktionskammer und bereits sehr stark erwärmten Primärwasser zweckmäßig ist.

Vorzugsweise ist das Kühlmedium Primärwasser, das in einem externen Kreislauf fließt.

Dadurch ist genügend Wärmekapazität vorhanden, um auf Dauer eine entsprechende Kühlung der Kondensationsfläche zu erreichen.

Das in der Auffangwanne für unverdampftes Primärwasser vorhandene Primärwasser kann erneut der Verdampfungsfläche zugeführt werden.

Durch die Wiederverwendung des unverdampften, aber erwärmten und von der Verdampfungsfläche abgeflossenen Primärwassers wird die noch im Primärwasser vorhandene Wärmeenergie genutzt, wodurch die Aufheizung über den Wärmetauscher an der Kondensationsfläche und über den Verdampfer nicht von Grund auf erfolgen muss, sondern von einem erhöhten Temperaturniveau aus.

Dabei kann das in der Auffangvorrichtung befindliche Primärwasser kontinuierlich oder bei Unterschreiten von Grenzwerten der Löslichkeit von Kontaminationsprodukten durch Zufuhr externen Primärwassers kompensiert werden.

Es bleibt hierbei weitgehend die im aufgefangenen Primärwasser bereits enthaltene Wärmeenergie vorhanden, jedoch wird eine ungünstige Veränderung der Konzentration verhindert, die bei Unterschreiten von Grenzwerten der Löslichkeit von Kontaminationsprodukten zu einem Ausfällen dieser Kontaminationsprodukten führen könnte.

Ferner kann ein Wärmespeicher für Primärwasser vorgesehen sein, aus dem erwärmtes Primärwasser bei Unterschreiten eines Grenzwertes der Solareinstrahlung zugeführt wird.

Hierdurch lässt sich auch eine Weiterführung der Destillation erreichen, wenn noch ausreichend erwärmtes Primärwasser vorhanden ist, aber die Solareinstrahlung nicht mehr zur zusätzlichen Temperaturerhöhung und damit Verdampfung reicht, z. B. bei starker Bewölkung oder während der Nacht.

Gemäß einer Weiterbildung kann ein Wärmeträger über einen mit der Verdampfungsfläche gekoppelten Wärmetauscher extern zugeführt sein.

Hierdurch ist es möglich, ergänzend zur Solareinstrahlung auch andere Wärmequellen zu nutzen, z. B. die Abwärme von Kraftwerken, Klärwerken oder Heizwerken.

Vorzugsweise sind außerhalb der Wände des Reaktionsraumes Reflektoren angeordnet, welche Solarstrahlung konzentrisch auf die Verdampfungsfläche richten.

Mit Hilfe dieser Reflektoren gelingt es, den gesamten umlaufenden Mantel der Verdampfungsfläche zu bestrahlen und so einen optimalen Solarenergieeintrag zu erzielen.

Bei einer bevorzugten Ausführung sind die Seitenwände des Reaktionsraumes sowie die Kondensationsfläche und die Verdampfungsfläche senkrecht ausgerichtet.

Dadurch können die Luft- und Dampfmassen beim Aufsteigen und Absinken dem Gravitationsfeld folgen, wodurch eine optimale Umwälzung erzielt wird.

Bei einer Ausführung der Vorrichtung ist das Verhältnis zwischen axialer Länge und Durchmesser des Reaktionsraumes zwischen 3 und 8, vorzugsweise 5 bemessen, und der Querschnitt des zwischen der Verdampfungsfläche und der Seitenwand des Reaktionsraumes gebildeten Außenraumes einerseits und der Querschnitt des durch die koaxiale Kondensationsfläche eingeschlossenen Innenraumes andererseits sind etwa gleich.

Das Längen-, Durchmesserverhältnis hat sich bei einem Prototypen als besonders günstig für den Ertrag an Süßwasser pro bestrahlter Fläche erwiesen. Die gleichen Querschnittsflächen ermöglichen einen konstanten Zirkulationsstrom der mit Wasserdampf angereicherten Luft.

Nachfolgend wird die Erfindung anhand der Zeichnung erläutert.

In der Zeichnung zeigen:
- Fig. 1: einen schematischen Längsschnitt durch eine Vorrichtung der Erfindung,
- Fig. 2: ein Strukturbild der Massenführungen von Primärwasser,
- Fig. 3: eine Darstellung der Massenführung eines äußeren Kreislaufs und
- Fig. 4: eine Darstellung der Massenführung eines inneren Kreislaufs.

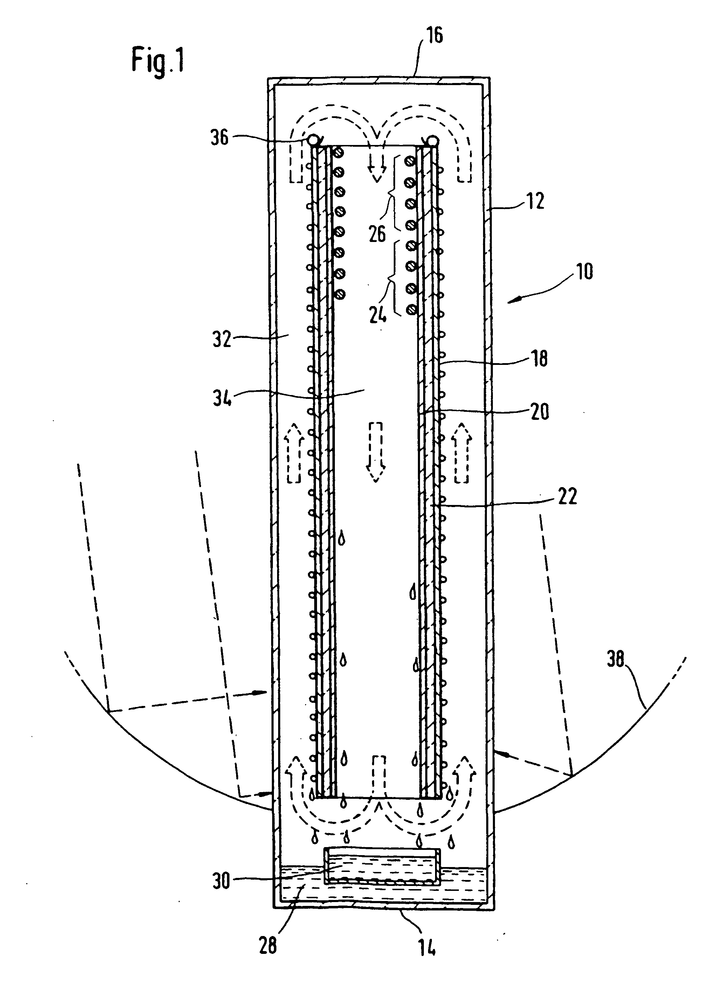

Die in Fig. 1 gezeigte Vorrichtung umfasst einen Reaktionsraum 10 mit transparenten Seitenwänden 12, in dem eine zylindrische Verdampfungsfläche 18 sowie eine zylindrische Kondensationsfläche 20 angeordnet und durch eine Wärmeisolationsschicht 22 voneinander getrennt sind. Der Reaktionsraum 10 ist senkrecht ausgerichtet, und die Seitenwände 12 sowie die Verdampfungsfläche 18 und die Kondensationsfläche 20 sind ebenfalls senkrecht ausgerichtet. Unterhalb der Kondensationsfläche 20 befindet sich eine Auffangvorrichtung 30 für abtropfendes sauberes Süßwasser und unterhalb der Verdampfungsfläche 18 eine Auffangvorrichtung für unverdampftes abtropfendes Primärwasser.

Ein Zirkulationsraum für durch thermische Anregung umgewälztde Luft sowie darin enthaltenen Wasserdampf ist einerseits durch einen Außenraum 32 zwischen der Verdampfungsfläche 18 und der Seitenwand 12 gebildet und andererseits durch einen Innenraum 34 der umlaufenden Kondensationswand 20. Diese beiden Räume 32, 34 sind zwischen der oberen Kante der Verdampfungsfläche 18 und der Kondensationsfläche 20 einerseits und der Oberseite 16 des Reaktionsraumes 10 andererseits sowie der unteren Kante der Verdampfungsfläche 18 und der Kondensationsfläche 20 einerseits und der Bodenseite 14 des Reaktionsraumes 10 andererseits strömungsverbunden, wodurch eine Zirkulationsströmung der Luft und des in der Luft befindlichen Wasserdampfes in Richtung der gestrichelt dargestellten Pfeile erzwungen wird.

Im oberen Bereich der Kondensationsfläche 20 ist ein erster Wärmetauscher 26, der von kontaminiertem Primärwasser aus der Auffangvorrichtung 30 durchströmt wird, und ein weiterer Wärmetauscher 24, der von externem Primärwasser durchströmt wird, angeordnet. Der Wärmetauscher 26 ist darüber hinaus mit Ausströmöffnungen 36 an der oberen Kante der Verdampfungsfläche 18 verbunden. Die Verdampfungsfläche 18 weist zur Oberflächenvergrößerung eine Struktur auf, die den Weg des über die Auslassöffnungen 36 eingeleiteten Primärwassers vergrö-ßert. Die Oberfläche der Verdampfungsfläche 18 ist außerdem als schwarzer Absorber ausgebildet.

Außerhalb der Reaktionskammer 10 befindet sich ein Reflektor 38, welcher einfallende Solarstrahlung konzentrisch in Richtung der umlaufenden Verdampfungsfläche 18 richtet.

Die Vorrichtung arbeitet wie folgt:

Über den Reflektor 38 einfallende Solarstrahlung gelangt durch die transparenten Seitenwände 12 der Reaktionskammer 10 von außen auf die Verdampfungsfläche 18. Die Verdampfungsfläche 18 wird daraufhin erwärmt. Primärwasser, welches aus den Auslassöffnungen 36 austritt und außen an der Verdampfungsfläche 18 abläuft, wird erwärmt und verdampft teilweise. Abhängig von der Temperatur der Verdampfungsfläche 18 tritt ein Teil des Wasserdampfes in die zirkulierende Luft über und folgt der durch aufsteigende Pfeile dargestellten Zirkulationsströmung im Außenraum 32 aufwärts. Ein Restanteil nicht verdampften Primärwassers tropft in die Auffangvorrichtung 28 für restliches Primärwasser herab.

Der aufsteigende Luftstrom mit dem darin enthaltenen Wasserdampf wird nach Passieren der oberen Kante von Verdampfungsfläche 18 und Kondensationsfläche 20 umgelenkt und sinkt in dem durch die Kondensationsfläche 20 gebildeten Innenraum 34 herab. Da die Kondensationsfläche 20 durch die Wärmetauscher 24 und 26 gekühlt wird, kondensiert ein Teil des Wasserdampfs an der Kondensationsfläche 20 und tropft schließlich in die Auffangvorrichtung 30 für sauberes Süßwasser herab. Der restliche nicht kondensierte Wasserdampf wird nach Passieren der unteren Kante der Verdampfungsfläche 18 und der Kondensationsfläche 20 nach außen umgelenkt und steigt erneut in dem zwischen der Verdampfungsfläche 18 und der Seitenwand 12 der Reaktionskammer 10 gebildeten Außenraum 32 aufwärts, wo erneut eine Anreicherung mit Wasserdampf durch Verdampfen des Primärwassers an der Oberfläche der Verdampfungsfläche 18 erfolgt. Diese Zirkulation wird durch die Temperaturdifferenz zwischen der erwärmten Verdampfungsfläche 18 und der gekühlten Kondensationsfläche 20 aufrechterhalten.

Das in der Auffangvorrichtung 30 gesammelte saubere Süßwasser kann an Verbraucher, z. B. ein öffentliches Wasserversorgungsnetz, weitergeleitet werden. Das in der Auffangvorrichtung 28 gespeicherte Primärwasser wird aus externen Quellen ergänzt, so dass dessen Pegel und die Konzentration von Kontaminationsprodukten, z. B. Salz, innerhalb vorgegebener Grenzwerte bleibt.

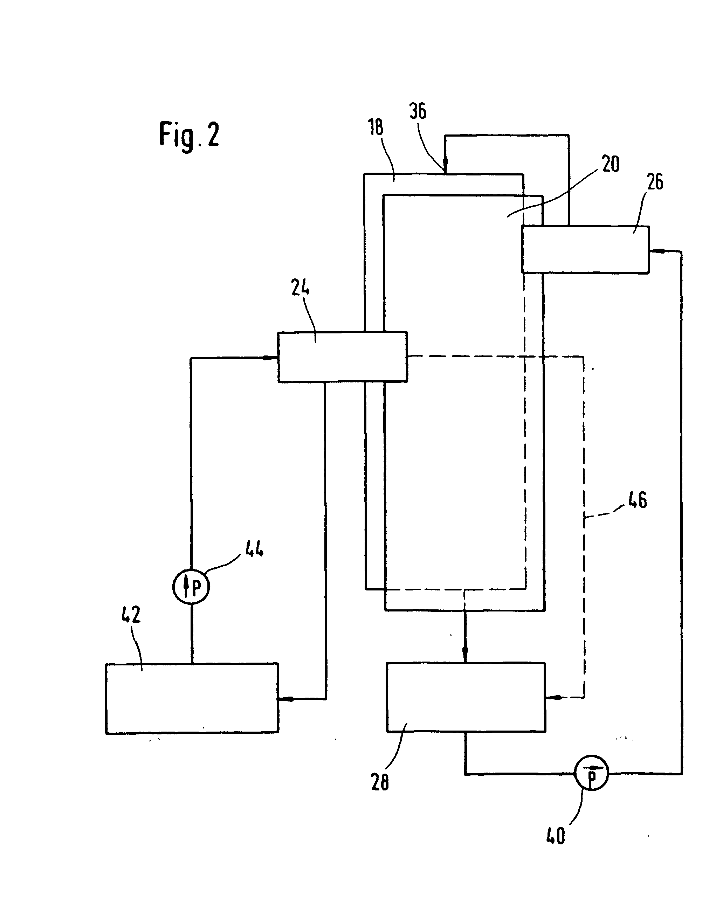

Fig. 2 zeigt eine Darstellung der Massenführungen für den äußeren und inneren Kreislauf des Primärwassers. In einem äußeren Kreislauf wird Primärwasser aus einem externen Reservoir 42 mittels einer Pumpe 44 durch den Wärmetauscher 24 geleitet und wieder ins externe Reservoir 42 zurückgeleitet. Es wird davon ausgegangen, dass das Temperaturniveau dieses Reservoirs 42 niedriger ist als die Innentemperatur der Reaktionskammer. Über einen Bypass 46 wird verbrauchtes Primärwasser in der Auffangvorrichtung 28 ergänzt.

In einem inneren Kreislauf wird Primärwasser aus der Auffangvorrichtung 28 über den Wärmetauscher 26 zu Auslassöffnungen 36 geleitet, und ein nicht verdampfter Anteil fließt an der Verdampfungsfläche 18 ab und gelangt zurück in die Auffangvorrichtung 28 für Primärwasser.

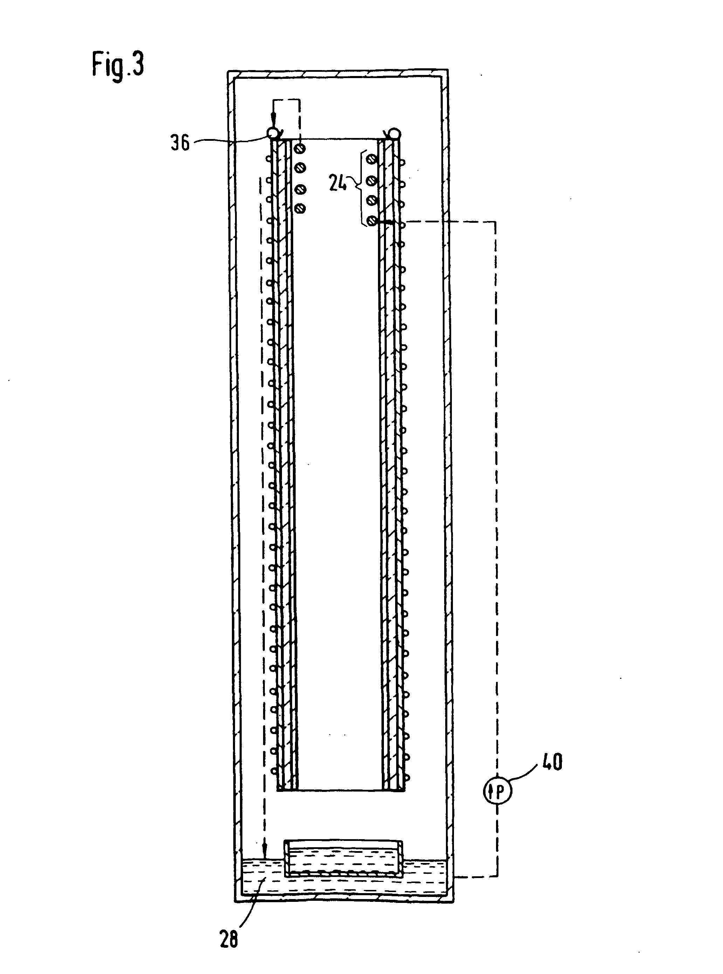

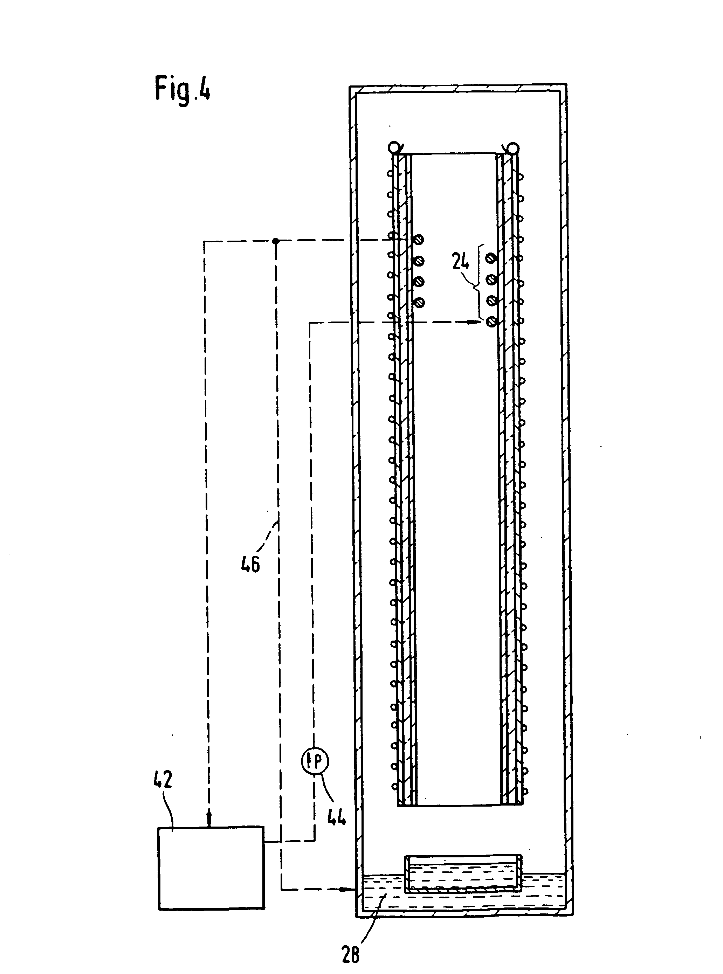

Die Darstellungen nach Fig. 3 und Fig. 4 zeigen den inneren Kreislauf und den äußeren Kreislauf nochmals gesondert anhand einer schematischen Darstellung der Verdampfungsfläche 18, der Kondensationsfläche 20 und der Wärmetauscher 24 und 26.

## Patentansprüche

1. Vorrichtung zur Gewinnung von sauberem Süßwasser durch Destillation von kontaminiertem Primärwasser, insbesondere Salzwasser, bestehend aus einem Reaktionsraum (10) mit einer solar beheizbaren und mit Primärwasser benetzbaren Verdampfungsfläche (18), einer Auffangvorrichtung (28) für unverdampftes Primärwasser, einer kühlbaren Kondensationsfläche (20), an der Wasserdampf des Primärwassers kondensiert, und einer Auffangvorrichtung (30) für von der Kondensationsfläche (20) abgeführtes Süßwasser, wobei die Verdampfungsfläche (18) und die Kondensationsfläche (20) eine Ausrichtung in einer senkrechten Komponente aufweisen, **dadurch gekennzeichnet, dass** die Verdampfungsfläche (18) und die Kondensationsfläche (20) koaxial im Reaktionsraum (10) angeordnet und durch eine Wärmeisolationsschicht (22) getrennt sind und ein Zirkulationsraum für Luft und darin enthaltenen Wasserdampf gebildet ist, in dem eine thermisch erzwungene Strömung von Luft und Wasserdampf zwischen einem durch die Verdampfungsfläche (18) und die Seitenwand (12) des Reaktionsraums (10) gebildeten Außenraum (32) aufwärts führt, an den oben liegenden Stirnkanten von Verdampfungsfläche (18) und Kondensationsfläche (20) von oben nach unten umgelenkt ist, in einem durch die koaxiale Kondensationsfläche (20) gebildeten Innenraum (34) abwärts führt und an den unten liegenden Stirnkanten von Kondensationsfläche (20) und Verdampfungsfläche (18) von unten nach oben umgelenkt ist.

2. Vorrichtung nach Anspruch 1, **dadurch gekennzeichnet, dass** die Seitenwand (12) des Reaktionsraumes (10) wenigstens teilweise für Wärmestrahlung transparent ist.

3. Vorrichtung nach Anspruch 1 oder 2, **dadurch gekennzeichnet, dass** die Verdampfungsfläche (18) als schwarzer Absorber ausgebildet ist.

4. Vorrichtung nach Anspruch 1 bis 3, **dadurch gekennzeichnet, dass** Primärwasser über einen im oberen Bereich der Kondensationsfläche (20) angeordneten Wärmetauscher (26) zu Auslassöffnungen (36) im oberen Bereich der Verdampfungsfläche (18) geführt ist.

5. Vorrichtung nach Anspruch 1 bis 4, **dadurch gekennzeichnet, dass** im oberen Bereich der Kondensationsfläche (20) zusätzlich ein Wärmetauscher (24) für Kühlmedium angeordnet ist.

6. Vorrichtung nach Anspruch 5, **dadurch gekennzeichnet, dass** das Kühlmedium Primärwasser ist, das in einem externen Kreislauf fließt.

7. Vorrichtung nach Anspruch 1 bis 6, **dadurch gekennzeichnet, dass** aus der Auffangvorrichtung (28) für unverdampftes Primärwasser dieses erneut der Verdampfungsfläche (18) zugeführt ist.

8. Vorrichtung nach Anspruch 1 bis 7, **dadurch gekennzeichnet, dass** das in der Auffangvorrichtung (28) befindliche Primärwasser kontinuierlich oder bei Unterschreiten von Grenzwerten der Löslichkeit von Kontaminationsprodukten durch Zufuhr externen Primärwassers kompensierbar ist.

9. Vorrichtung nach Anspruch 1 bis 8, **dadurch gekennzeichnet, dass** ein Wärmespeicher für Primärwasser vorgesehen ist, aus dem erwärmtes Primärwasser bei Unterschreitung eines Grenzwertes der Solareinstrahlung zugeführt ist.

10. Vorrichtung nach Anspruch 1 bis 9, **dadurch gekennzeichnet, dass** ein Wärmeträger über einen mit der Verdampfungsfläche (18) gekoppelten Wärmetauscher extern zugeführt ist.

11. Vorrichtung nach Anspruch 1 bis 10, **dadurch gekennzeichnet, dass** außerhalb der Wände des Reaktionsraumes (10) Reflektoren (38) angeordnet sind, welche Solarstrahlung konzentrisch auf die Verdampfungsfläche (18) richten.

12. Vorrichtung nach Anspruch 1 bis 11, **dadurch gekennzeichnet, dass** Seitenwände (12) des Reaktionsraumes (10) sowie die Kondensationsfläche (20) und die Verdampfungsfläche (18) senkrecht ausgerichtet sind.

13. Vorrichtung nach Anspruch 1 bis 12, **dadurch gekennzeichnet, dass** das Verhältnis zwischen axialer Länge und Durchmesser des Reaktionsraumes (10) zwischen 3 und 8, vorzugsweise 5 beträgt und der Querschnitt des zwischen der Verdampfungsfläche (18) und der Seitenwand (12) des Reaktionsraumes (10) gebildeten Außenraumes (32) einerseits und der Querschnitt des durch die koaxiale Kondensationsfläche (20) eingeschlossenen Innenraumes (34) andererseits etwa gleich sind.

## Claims

1. Device for obtaining clean fresh water by distilling contaminated primary water, especially salt water, comprising a reaction chamber (10) with a solar-heatable evapouration surface (18) that can be wetted with primary water, a collecting device (28) for unevapourated primary water, a coolable condensation surface (20), on which water vapour of the primary water condenses, and a collecting device (30) for fresh water removed from the condensation surface, with the evapouration surface (18) and the condensation surface (20) having an alignment in a vertical component, **characterized in that** the evapouration surface (18) and the condensation surface (20) are arranged coaxially in the reaction chamber (10) and are separated from each other by a heat insulating layer (22) and there is formed a circulation chamber for air and water vapour contained in it, in which a thermally enforced flow of air and water vapour passes upward between an outer chamber (32) formed by the evapouration surface (18) and the side wall (12) of the reaction chamber (10), is deflected from an upward direction into a downward direction at the edges at the upper end of the evapouration surface (18) and the condensation surface (20), passes downward through the inner chamber (34) formed by the coaxial condensation surface (20) and is deflected from a downward direction into an upward direction at the edges at the lower end of the condensation surface (20) and the evapouration surface (18).

2. Device according to Claim 1, **characterized in that** the side wall (12) of the reaction chamber (10) is at least partially transparent to thermal radiation.

3. Device according to Claim 1 or 2, **characterized in that** the evapouration surface (18) is formed as a black absorber.

4. Device according to Claims 1 to 3, **characterized in that** primary water is passed via a heat exchanger (26), which is arranged in the upper region of the condensation surface (20), to outlet openings (36) in the upper region of the evapouration surface (18).

5. Device according to Claims 1 to 4, **characterized in that** a heat exchanger (24) for cooling medium is additionally arranged in the upper region of the condensation surface (20).

6. Device according to Claim 5, **characterized in that** the cooling medium is primary water which is flowing in an external circuit.

7. Device according to Claims 1 to 6, **characterized in that**, from the collecting device (28) for unevapourated primary water, the latter can be fed once again to the evapouration surface (18).

8. Device according to Claims 1 to 7, **characterized in that** the primary water located in the collecting device (28) can be compensated by supplying external primary water continuously or when the solubility of contamination products falls below limit values.

9. Device according to Claims 1 to 8, **characterized in that** a heat accumulator for primary water is provided and used for supplying heated primary water if the solar irradiation falls below a limit value.

10. Device according to Claims 1 to 9, **characterized in that** a heat transfer medium can be externally supplied via a heat exchanger coupled to the evapouration surface (18).

11. Device according to Claims 1 to 10, **characterized in that** reflectors (38) which direct solar radiation concentrically onto the evapouration surface (18) are arranged outside the walls of the reaction chamber (10).

12. Device according to Claims 1 to 11, **characterized in that** side walls (12) of the reaction chamber (10) as well as the condensation surface (20) and the evapouration surface (18) are aligned vertically.

13. Device according to Claims 1 to 12, **characterized in that** the ratio between the axial length and the diameter of the reaction chamber (10) is between 3 and 8, preferably 5, and the cross section: on the one hand of the outer chamber (32), formed between the evapouration surface (18) and the side wall (12) of the reaction chamber (10), and the cross section on the other hand of the inner chamber (34), enclosed by the coaxial condensation surface (20), are approximately equal.

## Revendications

1. Dispositif de production d'eau douce pure par distillation d'eau primaire contaminée, en particulier d'eau salée, constitué d'un espace de réaction (10) comprenant une surface d'évaporation (18) pouvant être mouillée d'eau primaire et chauffée par voie solaire, un dispositif récepteur (28) pour de l'eau primaire non évaporée, une surface de condensation refroidissable (20) sur laquelle se condense de la vapeur d'eau de l'eau primaire, et un dispositif récepteur (30) pour de l'eau douce évacuée de la surface de condensation (20), la surface d'évaporation (18) et la surface de condensation (20) présentant une orientation dans une composante verticale, **caractérisé en ce que** la surface d'évaporation (18) et la surface de condensation (20) sont disposées coaxialement dans la chambre de réaction (10) et sont séparées par une couche thermiquement isolante (22) et il est formé un espace de circulation pour de l'air et de la vapeur d'eau qui y est contenue, en ce sens qu'un écoulement d'air et de vapeur d'eau thermiquement forcé, monte entre un espace extérieur (32) formé par la surface d'évaporation (18) et la paroi latérale (12) de la chambre de réaction (10), est renvoyé du haut vers le bas aux bords d'extrémité supérieurs de la surface d'évaporation (18) et de la surface de condensation (20), descend dans un espace intérieur (34) formé par la surface de condensation coaxiale (20), et est renvoyé du bas vers le haut aux bords d'extrémité inférieurs de la surface de condensation (20) et de la surface d'évaporation (18).

2. Dispositif selon la revendication 1, **caractérisé en ce que** la paroi latérale (12) de l'espace de réaction (10) est, au moins en partie, transparente pour le rayonnement thermique.

3. Dispositif selon la revendication 1 ou 2, **caractérisé en ce que** la surface d'évaporation (18) est réalisée en tant qu'absorbeur noir.

4. Dispositif selon l'une des revendications 1 à 3, **caractérisé en ce que** l'eau primaire est conduite à des ouvertures de sortie (36) dans la zone supérieure de la surface d'évaporation (18) par l'intermédiaire d'un échangeur de chaleur (26) disposé dans la région supérieure de la surface de condensation (20).

5. Dispositif selon l'une des revendications 1 à 4, **caractérisé en ce qu'**un échangeur de chaleur (24) pour du fluide de refroidissement est en outre disposé dans la région supérieure de la surface de condensation (20).

6. Dispositif selon la revendication 5, **caractérisé en ce que** le fluide de refroidissement est de l'eau primaire qui s'écoule dans un circuit externe.

7. Dispositif selon l'une des revendications 1 à 6, **caractérisé en ce qu'**à partir du dispositif récepteur (18) pour l'eau primaire non condensée, celle-ci est renvoyée à la surface d'évaporation (18).

8. Dispositif selon l'une des revendications 1 à 7, **caractérisé en ce que** l'eau primaire se trouvant dans le dispositif récepteur (28) peut être compensée par apport d'eau primaire externe, en continu ou lorsque la solubilité de produits de contamination passe en-dessous de valeurs limite

9. Dispositif selon l'une des revendications 1 à 8, **caractérisé en ce qu'**il est prévu un accumulateur de chaleur pour eau primaire, à partir duquel on amène de l'eau primaire réchauffée lorsque le rayonnement solaire passe en-dessous d'une valeur limite.

10. Dispositif selon l'une des revendications 1 à 9, **caractérisé en ce qu'**on amène de l'extérieur un caloporteur par l'intermédiaire d'un échangeur de chaleur couplé avec la surface d'évaporation (18).

11. Dispositif selon l'une des revendications 1 à 10, **caractérisé en ce que** des réflecteurs (38) sont disposés à l'extérieur des parois de la chambre de réaction (10) et dirigent le rayonnement solaire concentriquement sur la surface d'évaporation (18).

12. Dispositif selon l'une des revendications 1 à 11, **caractérisé en ce que** les parois latérales (12) de la chambre de réaction (10) ainsi que la surface de condensation (20) et la surface d'évaporation (18) sont orientées verticalement.

13. Dispositif selon l'une des revendications 1 à 12, **caractérisé en ce que** le rapport entre longueur axiale et diamètre de la chambre de réaction (10) est compris entre 3 et 8 et vaut de préférence 5, et la section de l'espace extérieur (32) formé entre la surface d'évaporation (18) et la paroi latérale (12) de la chambre de réaction (10) d'une part, et la section de l'espace intérieur (34) entouré par la surface de condensation coaxiale (20) d'autre part, sont à peu près égales.
